(19) Europäisches Patentamt
European Patent Office
Office européen des brevets

(11) EP 3 555 181 B1

(12) # EUROPEAN PATENT SPECIFICATION

(45) Date of publication and mention of the grant of the patent:
**03.01.2024 Bulletin 2024/01**

(21) Application number: **17808425.7**

(22) Date of filing: **30.11.2017**

(51) International Patent Classification (IPC):
***C08J 5/18*** *(2006.01)*

(52) Cooperative Patent Classification (CPC):
**C08J 5/18;** C08J 2323/12; C08J 2491/06

(86) International application number:
**PCT/EP2017/080936**

(87) International publication number:
**WO 2018/108542 (21.06.2018 Gazette 2018/25)**

(54) **A PROCESS FOR PRODUCING A NON-ORIENTED FILM WITH IMPROVED OXYGEN BARRIER PROPERTY**

VERFAHREN ZUR HERSTELLUNG VON NICHTAUSGERICHTETER FOLIE MIT VERBESSERTER SAUERSTOFFSCHRANKENEIGENSCHAFT

PROCÉDÉ DE PRODUCTION D'UN FILM NON ORIENTÉ PRÉSENTANT UNE PROPRIÉTÉ DE BARRIÈRE CONTRE L'OXYGÈNE AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2016 EP 16204483**

(43) Date of publication of application:
**23.10.2019 Bulletin 2019/43**

(73) Proprietors:
- **ABU DHABI POLYMERS CO. LTD (BOROUGE) L.L.C.**
  **Abu Dhabi (AE)**
- **Borealis AG**
  **1020 Vienna (AT)**

(72) Inventors:
- **VAN HOUCKE, Daniel Marie Andre**
  **Abu Dhabi (AE)**
- **KALIAPPAN, Senthil Kumar**
  **Abu Dhabi (AE)**
- **GADGOLI, Umesh Balkrishna**
  **Abu Dhabi (AE)**

(74) Representative: **Maiwald GmbH**
**Elisenhof**
**Elisenstraße 3**
**80335 München (DE)**

(56) References cited:
**EP-A1- 2 520 615**
**WO-A1-2010/104628**
**US-A- 5 204 037**
**US-A1- 2002 041 972**
**US-A1- 2011 184 127**
**US-A1- 2012 248 002**
**US-A1- 2013 196 166**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The present invention is directed to a process for producing a non-oriented film with improved oxygen barrier property, and to such a non-oriented film. The non-oriented film comprises a polyolefin composition comprising a propylene homo- or copolymer, a hydrocarbon resin and optionally a nucleating agent. The process involves cooling of the extruded film at a certain cooling temperature which is preferably higher than the cooling temperature of a film which has the same components in the same relative amounts apart from not comprising the hydrocarbon resin. The present invention is also directed to a polyolefin composition suitable for producing a non-oriented film with improved oxygen barrier property.

It is known in the art that films based on polyolefin compositions are widely used for several applications. One of these applications is food packaging. It is one of the main tasks in this connection to provide a film with sufficient oxygen barrier property. What is sufficient in this regard depends on the type of food to be packaged, on the desired storage life, and on the environmental conditions like temperature and oxygen partial pressure. In particular, for sensitive food it is always a task to improve oxygen barrier property.

Films for food packaging shall in addition be transparent, or more general, shall have good optical properties to provide an attractive appearance. This includes low haze, high transparency, and high gloss in a homogeneous way.

For example, US 2002/041972 discloses non-oriented cast films for packaging applications with improved transparency comprising a propylene/$\alpha$-olefin copolymer and a polyethylene wax.

Further on, the mechanical properties should be sufficient to allow easy handling of the film and at the same time to avoid unintentional damage of the film. Finally, easy processing of the film should be feasible for industrial applications.

In case of transparent films, if the thickness of the film is reduced, then optical properties will be improved, i.e. lower haze and higher transparency, however, mechanical properties and oxygen barrier property are typically consequently reduced.

Typically, transparent films for food packaging with good oxygen barrier property are biaxially oriented polypropylene (BOPP) films - or even better - biaxially oriented polyamide (BOPA) films and biaxially oriented polyethyleneterephthalate (BOPET) films.

Up to now there was no solution based on a polypropylene based non-oriented film like a cast film (CPP) that could get close to those films. Typical approaches to improve oxygen barrier property were considered but could not provide an equivalent solution. Addition of a nucleating agent has only a limited effect due to quenching and haze is increased. Oxygen scavengers have only limited use since moisture needs to be present in the packaging in order to be efficient. Nanoparticles are very difficult to disperse on an industrial scale and are questionable as regards food contact. A blend with barrier polymers is also not promising since these polymers are generally polar and are therefore difficult to disperse in polypropylene, even if a coupling agent is used. This translates to unacceptable optical properties, if transparency is desired. Finally, addition of fillers having a specific shape can slow down oxygen transfer through a film due to provision of a high specific surface. However, dispersion of these fillers is difficult since addition must in general take place at the end of the screw of the extruder in order to maintain the specific shape. Further on, optical properties are generally deteriorated.

Therefore, it is the object of the present invention to provide a process for producing a polypropylene based non-oriented film with improved oxygen barrier property.

The present invention is based on the finding that the object can be achieved by providing a process for producing a non-oriented cast film, as further described below.

Accordingly, the present invention is directed to a process for producing a non-oriented cast film, wherein the film comprises a polyolefin composition comprising the components (A), (B) and (C):

- (A) a propylene homo- or copolymer with an $MFR_2$ of 0.5-80 g/10 min as measured in accordance with ISO 1133,
- (B) a hydrocarbon resin product comprising a hydrocarbon resin, wherein the hydrocarbon resin has a softening point of 200 °C or less (ASTM-E28), preferably of 180 °C or less, more preferably of 170 °C or less, and
- (C) an alpha-nucleating agent, wherein the process comprises the steps of

  (a) providing the components for producing the film including components (A), (B) and (C),
  (b) blending the components before or during melt-mixing in an extruder for producing a film,
  (c) extruding the film by means of the extruder,
  (d) cooling the obtained film by a chill roll having a temperature of 40-90 °C, and
  (e) recovering of the obtained film.

The softening point of the hydrocarbon resin of the hydrocarbon resin product preferably is at or above 70 °C.

The hydrocarbon resin of the hydrocarbon resin product (B) of the present invention preferably has a weight

average molecular weight of 500-5,000 g/mol, preferably of 700-3,000 g/mol.

The hydrocarbon resin of the hydrocarbon resin product (B) of the present invention preferably has a melt viscosity of 80-400 mPa.s at 200 °C, more preferably of 100-400 mPa.s at 200 °C, still more preferably of 150-400 mPa.s at 200°C.

The hydrocarbon resin of the hydrocarbon resin product (B) according to of the present invention preferably has a softening point of 180 °C or less, more preferably of 170 °C or less. The softening point will be usually at or above 70 °C.

The hydrocarbon resin of the hydrocarbon resin product (B) according to the present invention preferably has a weight average molecular weight of 500-5,000 g/mol, preferably of 700-3,000 g/mol, and has a melt viscosity of 80-400 mPa.s at 200 °C, more preferably of 100-400 mPa.s at 200 °C, still more preferably of 150-400 mPa.s at 200°C.

The "polyolefin composition" is referred herein also shortly as "polymer composition".

The propylene homo- or copolymer (A) and the hydrocarbon resin product (B) are referred herein also as component (A) and component (B), respectively.

In the extrusion step (c), the extrusion of the film, the melt-mix of the polymer composition is extruded through a die with dimensions as desired for the end film application, as well known in the art.

Immediately after exiting the die at the extrusion step (c) the molten film enters the cooling step (d) where its temperature is lowered to solidify the film.

Preferably, the cooling step of the process of the present invention comprises cooling the extruded film at a certain cooling temperature, wherein the cooling temperature is higher than the cooling temperature of a film which has the same components in the same relative amounts apart from not comprising said hydrocarbon resin product (B).

As will be demonstrated in more detail with reference to the examples below, the inventive combination of component (A) and component (B) enables to provide a marked improvement of oxygen barrier property of a non-oriented film compared to a non-oriented film not comprising component (B). This improved oxygen barrier property is seen in a marked reduction of the oxygen transmission rate (OTR) of a non-oriented film. The OTR is preferably reduced by at least 30 % and may be reduced to up to about 50 %.

Preferably, also the stiffness of a non-oriented film is enhanced and may be even doubled. This improved stiffness is indicated by the respective tensile properties. Accordingly, the present invention provides properties to a non-oriented cast film which are close to the properties of an oriented film like BOPP.

The cooling step is normally performed rather quick, i.e. at rather low cooling temperature, since otherwise the obtained films are hazy. It is surprising that according to the present invention it is possible that the process is run with comparably higher cooling temperature but nevertheless films with good optical properties are obtained.

Preferably, the present inventive combination of component (A) and component (B) enables to provide a non-oriented film with very good optical properties, for instance in terms of one, more or all, preferably all, of reduced haze, increased gloss and transparency. The presence of component (B) also enables to run the process of producing a non-oriented film with higher cooling temperature without deterioration of optical properties, e.g. to produce a cast film with comparably higher chill roll temperature. Preferably, due to higher cooling temperature option, the presence of component (B) enables the addition of a nucleating agent and thereby further improving the oxygen barrier property of a non-oriented film, i.e. further reducing oxygen transmission rate, via the nucleating agent's effect on crystallinity. Finally, the presence of component (B) preferably reduces the melt pressure during the film preparation process which contributes to an industrially feasible film preparation process in terms of processability, meaning an option to achieve higher output, if desired.

Accordingly, the polyolefin composition comprises an alpha-nucleating agent (C), referred herein also as component (C).

A non-oriented film is often referred to also as unoriented film.

One distinguishes between unoriented and oriented films (see for instance polypropylene handbook, Nello Pasquini, 2nd edition, Hanser). Oriented films are typically monoaxially or biaxially oriented films. Accordingly, an unoriented film is not drawn on purpose (intentionally) in solid or close to solid state in machine and/or transverse direction as done by oriented films, i.e. unoriented film means herein that the film is not intended to be oriented. Thus the unoriented film is not a monoaxially or biaxially oriented film as evident for a skilled person.

In some embodiments the chill roll temperature may also be 40-80 °C, more preferably 40-70 °C, still more preferably 40-60 °C.

In some embodiments the chill roll temperature may also be 50-90 °C, more preferably 50-80 °C, still more preferably 50-70 °C, yet more preferably 50-60 °C.

The cast film process is well known by the skilled person and well described in the literature.

The non-oriented film preferably comprises at least 80 wt.-%, still more preferably at least 95 wt.-%, like consisting of, the polyolefin composition comprising the components (A), (B) and (C) as defined in more detail below.

The process of the present invention covers the production of monolayer and multilayer films.

The thickness of the film is not critical but will be usually 20-200 μm.

In case a monolayer film is produced, it comprises at least 80 wt.-%, preferably at least 95 wt.-%, preferably it consists, of the polyolefin composition comprising the components (A), (B) and (C).

In case a monolayer film is produced, it preferably comprises the hydrocarbon resin product (B) in an amount of 1-40 wt.-%, more preferably is 2-40 wt.-%, and still more preferably 5-30 wt.-%, 7-30 wt.-%, or 10-30 wt.-%, based on the monolayer film (100 wt.-%).

Typical thickness of the monolayer film of the invention is between 20-200 $\mu$m, suitably 20-100 $\mu$m.

In case a multilayer film is produced it comprises at least one layer comprising the polyolefin composition comprising the components (A), (B) and (C). Said layer(s) of the multilayer film comprising the polyolefin composition can be any layer(s), e.g. core or outer layer(s). The thickness of a layer of a multilayer film, the respective layer comprising the polyolefin composition comprising the components (A), (B) and (C), can vary between 1-200 $\mu$m, suitably 1-190 $\mu$m, depending on the function of the layer, i.e. whether the layer functions e.g. as outer layer (skin layer) or as core layer, and is selected accordingly, as well known for a skilled person. For instance, outer layer can have a thickness of 2-3 $\mu$m, and the thickness of core layer can e.g. be 20-200 $\mu$m, such as 20-100 $\mu$m.

The at least one layer of the multilayer film comprises at least 80 wt.-%, preferably at least 95 wt.-%, preferably consists, of the polymer composition comprising the components (A), (B) and (C). In the following the polyolefin composition is defined in more detail.

As mentioned above the polyolefin composition comprises the component (A), i.e. the propylene homo- or copolymer (A), the component (B), i.e. the hydrocarbon resin product (B), and the alpha-nucleating agent (C). In addition the polyolefin composition may comprise other polymers (D) different to the component (A), i.e. the propylene homo- or copolymer (A), and different to the hydrocarbon resin product (B).

The component (A): Propylene homo- or copolymer (A)

The melt flow rate ($MFR_2$) of the component (A), i.e. of the propylene homo- or copolymer (A), is preferably 0.5-20 g/10 min, more preferably 1-20 g/10 min.

In case component (A) is a propylene copolymer, one or more, e.g. two, three, or more comonomers may be present. Therefore, the term copolymer used herein includes terpolymers and also copolymers based on more than three different polymerizable monomers.

The comonomer of propylene copolymer as component (A) is preferably selected from ethylene, $C_4$-$C_8$-$\alpha$-olefins and mixtures thereof, suitably from ethylene, butene, hexene and/or octene.

The comonomer content in propylene copolymer as component (A) is preferably less than 7.5 mol.-% based on the propylene copolymer. The comonomer content will be usually at least 0.5 mol.-% based on the propylene copolymer.

It is particularly preferred that component (A) is a propylene homopolymer.

The expression homopolymer used in the instant invention relates to a polypropylene that consists substantially, i.e. of at least 99.5 wt.-%, more preferably of at least 99.8 wt.-%, of propylene units. In a preferred embodiment only propylene units in the propylene homopolymer are detectable. The comonomer content can be determined with $^{13}C$ NMR spectroscopy.

In this regard it is especially preferred that the propylene homopolymer as component (A) has a pentad isotacticity (mmmm) of equal or more than 98.0 mol%. Independently or additionally, it is especially preferred that the propylene homopolymer has a melting temperature ($T_m$) of at least 150.0 °C. Independently or additionally, it is especially preferred that the propylene homopolymer has a xylene cold soluble (XCS) content of equal or below 1.5 wt.-%. According to a particular preferred embodiment the propylene homopolymer has all of the above-mentioned three especially preferred properties.

It is further preferred that the propylene homopolymer as component (A) has an even higher pentad isotacticity (mmmm), i.e. equal or more than 98.5 mol.-%, more preferably equal or more than 99.0 mol.-%. The pentad isotacticity (mmmm) will be necessarily equal or below 100.0 mol.-% and will be usually equal or below 99.8 mol.-%.

It is further preferred that component (A), preferably the propylene homopolymer, has a melting temperature of at least 153.0 °C, more preferably of at least 163.0 °C. The upper limit of the melting temperature is usually equal or below 175 °C.

It is further preferred that component (A), preferably the propylene homopolymer, has a flexural modulus of at least 1,400 MPa, more preferably of at least 2,000 MPa. The flexural modulus is usually equal or below 4,000 MPa, preferably of 2,000 to 3,000 MPa.

It is further preferred that component (A), preferably the propylene homopolymer, has a Vicat softening temperature of at least 140 °C, more preferably of at least 145 °C, still more preferably of at least 150 °C. The Vicat softening temperature is usually equal or below 170 °C.

The amount of the component (A), i.e. of the propylene homo- or copolymer, is preferably 60-99 wt.-%, more preferably is 60-98 wt.-%, and still more preferably 70-95 wt.-%, 70-93 wt.-%, or 70-90 wt.-%, based on the entire

polyolefin composition (100 wt.-%).

The component (A), i.e. the propylene homo- or copolymer (A), can be commercially available product or can be produced e.g. by conventional polymerization processes and process conditions using e.g. the conventional catalyst system, like Ziegler-Natta catalyst or single site catalyst, including metallocene catalyst, preferably Ziegler-Natta catalyst, which have a well-known meaning and which are well described in the literature.

The component (A), i.e. the propylene homo- or copolymer (A), of the invention may for instance be produced in a continuous multistage process in a conventional manner. Such process preferably comprises at least two polymerization stages. A preferred multistage process is a "loop-gas phase"-process, such as developed by Borealis (known as BORSTAR® technology) described e.g. in patent literature, such as in EP 0 887 379, WO 92/12182 WO 2004/000899, WO 2004/111095, WO 99/24478, WO 99/24479 or in WO 00/68315.

**The component (B): Hydrocarbon resin product comprising a hydrocarbon resin**

In the following the component (B) is further specified.

With regard to the weight average molecular weight, the melt viscosity and the softening point, respectively, of the hydrocarbon resin of the component (B), i.e. of the hydrocarbon resin product, it is referred to the information already provided above.

The term "resin" as defined for the component (B) ), i.e. of the hydrocarbon resin product, has a well-known meaning in the art.

The hydrocarbon resin of component (B), i.e. of the hydrocarbon resin product, of the polyolefin composition described above is preferably amorphous.

The hydrocarbon resin of component (B), i.e. of the hydrocarbon resin product, is preferably additionally characterized by a glass transition temperature of 0-100 °C, more preferably of 40-90 °C.

The hydrocarbon resin of component (B), i.e. of the hydrocarbon resin product, can be obtainable from a natural source, i.e. from nature, like a distillate of a fractionation process of an inorganic material or distillate or extract of organic, like plant, material, or obtainable synthetically.

According to one embodiment, the hydrocarbon resin of component (B), i.e. of the hydrocarbon resin product, comprises an aliphatic resin, an aromatic resin, an aliphatic/aromatic copolymer resin, or mixtures thereof. Aliphatic resins cover linear aliphatic resins, which can be unbranched or branched, and cycloaliphatic resins.

In one embodiment of the present invention the aliphatic resin of component (B), i.e. of the hydrocarbon resin product, comprises a C5 monomer based resin and/or a dicyclopentadiene monomer based resin. Accordingly, C5 monomer based resin is a polymerisation product of C5 monomer(s), and dicyclopentadiene monomer based resin is a polymerisation product of dicyclopentadiene monomer. Preferably, in this embodiment the C5 monomer based resin and/or a dicyclopentadiene monomer based resin is/are the major component (more than 50 wt%, preferably more than 60 wt%, preferably more than 80 wt%, based on the C5 monomer based resin and/or a dicyclopentadiene monomer based resin of the component (B).

The C5 monomer can include, for example, 1-pentene, isoprene, cyclopentadiene, or 1,3-pentadiene monomers, or any combinations thereof.

In another embodiment of the invention the aliphatic resin of component (B), i.e. of the hydrocarbon resin product, comprises a mixture of alkanes, such as mixture of pentane.

In a further embodiment of the present invention the aromatic resin of component (B), i.e. of the hydrocarbon resin product, comprises a C9 monomer based resin, like an indene resin, a coumarone resin, a styrene resin or a phenol resin, such as alkyl-phenol and terpene-phenol resins, and mixtures thereof. Accordingly, C9 monomer based resin is a polymerisation product of C9 monomer(s). Preferably, in this embodiment the C9 monomer based resin is the major component (more than 50 wt%, preferably more than 60 wt%, preferably more than 80 wt%, based on the aromatic resin of the component (B).

The C9 monomer can include, for example, indene, vinyl-toluene, alpha-methylstyrene or beta-methylstyrene monomer(s).

Aromatic resins of component (B), i.e. of the hydrocarbon resin product, are typically based on more than one of the above-mentioned monomer units, and can be e.g. a coumarone-indene resin, a phenol-modified coumarone-indene resin, an alkyl-phenol resin or a terpene-phenol resin.

In one preferred embodiment of the present invention the hydrocarbon resin of component (B), i.e. of the hydrocarbon resin product, comprises, more preferably the hydrocarbon resin of component (B), i.e. of the hydrocarbon resin product, consists of, polymers derived from the polymerization of terpene units, sesquiterpene units, diterpene units and/or mixtures thereof. Such units can be aliphatic or alicyclic units, such as monocyclic or bicyclic units; or mixtures thereof. A typical example of this embodiment is a polyterpene resin derived from the catalytic polymerization of the bicyclic monoterpene pinene (β-pinene). The hydrocarbon resins of component (B), i.e. of the hydrocarbon resin product, of this embodiment can be obtained from nature, like plants, or produced by synthetic reaction.

Accordingly, in a further preferred embodiment of the present invention the hydrocarbon resin of component (B), i.e. of the hydrocarbon resin product, comprises pine resins, such as rosin (solid form of pine resin). The pine resin is typically a mixture composed mainly of terpenes and derivatives thereof. As mentioned above, pine resins can be plant-derived or of synthetic origin, i.e. the pine resins of this embodiment can be obtained from plants or produced by synthetic reaction. In this embodiment the hydrocarbon resin of component (B), i.e. of the hydrocarbon resin product, preferably consists of pine resins.

In a further embodiment, the hydrocarbon resin of component (B), i.e. of the hydrocarbon resin product, comprises a partially or fully hydrogenated hydrocarbon resin derived from any of the hydrocarbon resins mentioned above.

Preferably, the hydrocarbon resin of component (B), i.e. of the hydrocarbon resin product, comprises, preferably consists of, a partially or fully hydrogenated hydrocarbon resin derived from any of the hydrocarbon resins mentioned above.

A particularly preferred hydrocarbon resin of component (B), i.e. of the hydrocarbon resin product, is an aliphatic C5 monomer based resin which is fully hydrogenated.

A further particularly preferred hydrocarbon resin of component (B), i.e. of the hydrocarbon resin product, is an aromatic C9 monomer based resin.

The hydrocarbon resin of component (B), i.e. of the hydrocarbon resin product, can be in form of hydrocarbon resin as such (as is) or in form of a master batch, wherein the hydrocarbon resin is mixed with a carrier.

The component (B), i.e. the hydrocarbon resin product, may optionally include further ingredients like stabilizers as provided by suppliers, as known in the art. The carrier of optional master batch as the hydrocarbon resin product (B) is typically a polymer, e.g. polyolefin, like polypropylene, which is compatible with the component (A).

The amount of the component (B), i.e. of the hydrocarbon resin product, is preferably 1-40 wt.-%, more preferably is 2-40 wt.-%, and still more preferably 5-30 wt.-%, yet more preferably 7-30 wt.-%, or 10-30 wt.-%, based on the entire polyolefin composition (100 wt.-%).

The term "hydrocarbon resin" has a generally acknowledged and well-known meaning in the prior art. A hydrocarbon resin product (B) is typically a commercially available product as supplied by suppliers, e.g. as a master batch as indicated above. It is understood herein that in case of optional master batch or other components optionally present in the hydrocarbon resin product (B), the amount of the carrier and/or other component(s) is calculated to the amount of the hydrocarbon resin product (B) based on the polymer composition (100 wt.-%).

**The nucleating agent (C)**

As indicated already above, an additional component of the polyolefin composition in the process of the present invention is an alpha-nucleating agent (C).

A nucleating agent (C) denotes herein a compound or composition which is added on purpose to increase the crystallization rate within the solid polymer and lead to an increased degree of crystallinity (and often to a smaller crystal size) of the solid polymer.

The nucleating agent (C) can be introduced during the preparation process of the polymer composition, or it may be, and preferably is, present in the component (A) before mixing the components (A) and (B) during the production of the polymer composition. Preferably, nucleating agent (C) is introduced to the propylene homo- or copolymer (A), preferably to the propylene homopolymer, during the polymerization process of the polymer (A).

The amount of the nucleating agent (C) can vary depending on the desired nucleation effect, and can be chosen by a skilled person. In case nucleating agent (C) is added separately e.g. to component (A) or to a mixture of components (A) and (B), then it can be added as such (neat), in form of a product as supplied by the supplier or in form of master batch. In case of optional product or master batch, any further components and/or carrier are calculated to the amount of the nucleating agent (C).

The amount of nucleating agent (C) is preferably not more than 10,000 ppm, more preferably not more than 6,000 ppm, even more preferably not more than 5,000 ppm based on the entire polyolefin composition (100 wt.-%), i.e. based on all components taken together. The amount of optional nucleating agent (C) is usually at least 0.01 ppm based on the entire polyolefin composition (100 wt.-%), i.e. based on all components taken together.

In one preferable embodiment nucleating agent (C) is present at least in the component (A). In this embodiment nucleating agent (C) is preferably introduced to the propylene homo- or copolymer (A), more preferably to the propylene homopolymer (A), during the polymerization process of the polymer (A). In this embodiment the amount of nucleating agent (C) in the component (A) is preferably not more than 500 ppm, more preferably is from 0.025 to 200 ppm, and most preferably is from 0.1 to 100 ppm, based on the combined weight of propylene homo- or copolymer (A) and nucleating agent (C).

The alpha-nucleating agent (C) is preferably selected from the group consisting of

(i) salts of monocarboxylic acids and polycarboxylic acids, and

(ii) dibenzylidenesorbitol (e.g. 1,3 : 2,4 dibenzylidene sorbitol) and $C_1$-$C_8$-alkylsubstituted dibenzylidenesorbitol derivatives, and
(iii) salts of diesters of phosphoric acid, and
(iv) vinylcycloalkane polymer and/or vinylalkane polymer, and
(v) mixtures thereof.

According to a particular preferred embodiment, the alpha-nucleating agent (C) is a polymeric alpha-nucleating agent, more preferably comprises, still more preferably consists of, vinylcycloalkane polymer and/or vinylalkane polymer (iv) (also referred herein as polymer of the (optional) vinyl compound or polymerized vinyl compound), yet more preferably vinylcycloalkane polymer.

In this regard it is further preferred that the nucleating agent (C) comprises, more preferably consists of, a vinylcycloalkane polymer and/or a vinylalkane polymer (iv), wherein the underlying vinyl compound has the following formula,

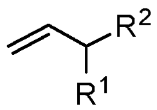

wherein $R^1$ and $R^2$ are independently selected from $C_1$-$C_4$-alkyl groups or they form together a saturated five- or six-membered ring, whereby this ring may be substituted and/or bridged with one or more $C_1$- or $C_2$-alkyl groups, and more preferably, the vinyl compound is selected from the group consisting of vinyl cyclopentane, vinyl cyclohexane, vinyl-2-methylcyclohexane, vinyl norbonane, 3-methyl-1-butene, and mixtures thereof.

The alpha-nucleating agent (C) may also be preferably selected from polymers of vinyl compounds which fulfill the above formula but wherein $R^1$ and $R^2$ do not form together a saturated five- or six-membered ring, but an unsaturated or an aromatic five- or six-membered ring, whereby this ring may be substituted and/or bridged with one or more $C_1$- or $C_2$-alkyl groups, and more preferably, the vinyl compound is selected from the group consisting of styrene, p-methyl-styrene, and mixtures thereof.

Also mixtures between any of the above exemplified vinylcycloalkane polymers and/or vinylalkane polymers and styrene and/or p-methyl-styrene are preferred.

It is most preferred that the alpha-nucleating agent (C) comprises, more preferably consists of, vinyl cyclohexane (VCH) polymer.

It is furthermore preferred that the respective polymer of the vinyl compound is introduced to the propylene homo- or copolymer (A) during the polymerization thereof by using the so called BNT technology. With regard to the BNT-technology reference is made to the international applications WO 99/24478, WO 99/24479 and particularly WO 00/68315. According to this technology a catalyst system, preferably a Ziegler-Natta procatalyst, can be modified by polymerizing a vinyl compound in the presence of the catalyst system, comprising in particular the special Ziegler-Natta procatalyst, an external donor and a cocatalyst. The vinyl compound is as defined above. The polymerized vinyl compound acts as an alpha-nucleating agent (C). The weight ratio of vinyl compound to solid catalyst component in the modification step of the catalyst is preferably of up to 5 (5:1), more preferably up to 3 (3:1), like in the range of 0.5 (1:2) to 2 (2:1).

Preferably the nucleating agent (C) is present at least in the component (A). The nucleating agent (C) is an alpha-nucleating agent (C) as defined above, including the suitable and preferable subgroups thereof, e.g. a polymeric alpha-nucleating agent (C).

It is preferred that components (A), (B) and (C), make up together at least 80 wt.-%, more preferably at least 85 wt.-%, still more preferably at least 90 wt.-%, like at least 95 wt.-% or at least 98 wt.-% of the polyolefin composition. Apart from components (A), (B) and (C), the polyolefin composition may comprise, and preferably comprises, conventional additives. In one specific embodiment the polyolefin composition consists of components (A), (B) and (C), and additives. It is to be understood herein that "additives" do neither comprise hydrocarbon resin product (B) nor nucleating agent (C), i.e. herein components (B) and (C) are not considered as "additives".

Additives are preferably present in the polymer composition and can be partly or fully be present in component (A), (B), (C), and/or partly or full added to the polymer composition during the preparation thereof. Additives are suitably selected from the group of primary antioxidants like sterically hindered phenols and secondary antioxidants like phosphites, UV stabilizers like sterically hindered amines, acid scavengers, carbon black, pigment, antistatic agents like glycerol monostearate, slip agents like oleamide, plasticizers, anti-scratch agents, dispersing agents, processing aids, lubricants, and the like.

Such additives are commercially available and for example described in "Plastic Additives Handbook", 6th edition 2009 of Hans Zweifel (pages 1141 to 1190) and typically used in conventional amounts.

Furthermore, the additives may be added as such (neat) or as a product as supplied by supplier, including a

master batch, wherein the additive is together with a carrier material. Any carrier material of the optional master batch is calculated to the amount of the additive based on the amount of the polymer composition (100 wt.-%).

An optional polymeric carrier material of the hydrocarbon resin (B), the nucleating agent (C) or optional additives, if any, is a carrier polymer to ensure a uniform distribution in the extruder in the process of the present invention. The optional polymeric carrier material is not limited to a particular polymer. The optional polymeric carrier material may be ethylene homopolymer, ethylene copolymer obtained from ethylene and $\alpha$-olefin comonomer such as $C_3$ to $C_8$ $\alpha$-olefin comonomer, propylene homopolymer and/or propylene copolymer obtained from propylene and $\alpha$-olefin comonomer such as ethylene and/or $C_4$ to $C_8$ $\alpha$-olefin comonomer.

## Polymer(s) (D)

The polymer composition may comprise further polymer(s) (D) other than propylene homo- or copolymer (A) and the hydrocarbon resin product (B). In case of optional further polymer(s) (D) the amount of the component is less than 15 wt.-%, preferably less than 10 wt.-%, more preferably less than 9 wt.-%, based on the weight of the polyolefin composition. It is to be understood herein that any carrier polymer for hydrocarbon resin product (B), nucleating agent (C) or optional additives is not included to the definition of optional further polymer(s) (D) nor calculated to the amount thereof.

Preferably, the polyolefin composition does not comprise further polymer (s) (D), i.e. preferably, the process of the present invention does not cover blending further polymer(s) (D) different to the propylene homo- or copolymer (A) and the hydrocarbon resin of product (B).

## The polyolefin composition

The polyolefin composition has preferably a relative (normalised to 1 mm film thickness) oxygen transmission rate of less than 61 ml/$m^2$·d (1 mm film), preferably less than 60 ml/$m^2$·d (1 mm film), such as 20 to 60 ml/$m^2$·d (1 mm film), when measured as described under "EXAMPLES".

The polyolefin composition has preferably a tensile modulus in machine direction (MD) of at least 1,000 MPa, preferably of at least 1,200 MPa, preferably of 1,000 to 4,000 MPa, preferably of 1,200 to 3,000 MPa, when measured from a film sample as described under "EXAMPLES".

The polyolefin composition has preferably a tensile modulus in transverse direction (TD) of at least 1000 MPa, preferably of at least 1200 MPa, preferably of 1000 to 4000 MPa, preferably of 1200 to 3000 MPa, when measured from a film sample as described under "EXAMPLES".

According to certain embodiments, the polyolefin composition as described in detail above does not comprise one, two three or all of the following four blends.

- a blend of a polypropylene polymer having an $MFR_2$ of 2.9 g/10 min, 15 wt.-% of a dicyclopentadiene based hydrocarbon resin having a softening point of 140 °C, and 180 ppm of a nucleating agent

- a blend of a propylene homopolymer having a density of 0.91 g/$cm^3$ and a melt index of 2.0 g/10 min, 15 wt.-% of a fully hydrogenated hydrocarbon resin having a softening point of 125 °C, and 3,000 ppm of 1,3:2,4-dibenzylidene sorbitol

- a blend comprising a propylene ethylene random copolymer having a melt index at 230 °C and 2.16 kg load of 7.2 g/10 min, 0.3 wt.-% or 1.0 wt.-% of a hydrocarbon resin, and 0.05 wt.-% of calcium stearate

- a blend of 83.3 wt.-% of a polypropylene, 14.7 wt.-% of a hydrocarbon resin, 0.08 wt.-% of a nucleating agent, and 1.92 wt.-% of a low density polyethylene.

## The non-oriented film

The present invention is also directed to a non-oriented film obtainable, preferably obtained, by the process according to the present invention as described above, i.e. according to any of the three aspects of the process of the present invention including all preferred embodiments thereof.

The non-oriented film can be a monolayer or a multilayer film.

The non-oriented film of the invention is preferably transparent.

The non-oriented film of the invention has preferably excellent optical properties expressed e.g. in terms of one, more or all, preferably all, reduced haze, increased gloss and increased transparency (quantity of light to go through the film).

The non-oriented film of the invention is a cast film, preferably a monolayer cast film, obtainable, preferably obtained, by the process according to the present invention as described above, including all preferred embodiments thereof.

The present invention will now be described in further detail by the examples provided below.

## EXAMPLES

### 1. Definitions/Measuring Methods

The following definitions of terms and determination methods apply for the above general description of the invention as well as to the below examples unless otherwise defined. **$MFR_2$** is measured at 230 °C with a load of 2.16 kg according to ISO 1133.

Pentad **isotacticity** (mmmm) is determined by $^{13}C$ NMR spectroscopy as defined below. Quantitative nuclear-magnetic resonance (NMR) spectroscopy was used to quantify the stereo-regularity (tacticity) and regio-regularity of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics.

For polypropylene homopolymers approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad (mmmm) at 21.85 ppm.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[\text{mmmm}]\ \% = 100 * (\text{mmmm} / \text{sum of all pentads})$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = ( I_{e6} + I_{e8} ) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * ( P_{21e} / P_{total} )$$

Quantitative nuclear-magnetic resonance (NMR) spectroscopy was used to quantify the **comonomer content** of the polymers.

Quantitative $^{13}C$ {$^{1}H$} NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimised 10 mm extended temperature probehead at 125 °C using nitrogen gas for all pneumatics. Approximately 200 mg of material was dissolved in 3 ml of 1,2-tetrachloroethane-$d_2$ (TCE-$d_2$) along with chromium-(III)-acetylacetonate ($Cr(acac)_3$) resulting in a 65 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ 16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6 k) transients were acquired per spectra. Quantitative $^{13}C$ {$^{1}H$}NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer.

The comonomer fraction was quantified using the method of W-J. Wang and S. Zhu, Macromolecules 2000, 33 1157, through integration of multiple signals across the whole spectral region in the $^{13}C$ {$^{1}H$} spectra. This method was chosen for its robust nature and ability to account for the presence of regio-defects when needed. Integral regions were slightly adjusted to increase applicability across the whole range of encountered comonomer contents.

The mole percent comonomer incorporation was calculated from the mole fraction.

The weight percent comonomer incorporation was calculated from the mole fraction.

**Vicat softening temperature:** Softening point for soft plastics can be measured according to ISO 306:2013 standard method; on specimen type plaque 240x240x4mm, conditioning time 96 hrs or more, heating rate 50 K/h, load 10 N.

**Softening point** is measured according to ASTM-E28.

**Melting temperature ($T_m$), crystallization temperature ($T_{cr}$), and degree of crystallinity:** The melting temperature of the used polymers was measured in accordance with ASTM D3418. $T_m$ and $T_{cr}$ were measured with Mettler TA820 differential scanning calorimetry (DSC) on 3+/-0.5 mg samples. Both crystallization and melting curves were obtained during 10 °C/min cooling and heating scans between -10 to 200 °C. Melting and crystallization temperatures were taken as the peaks of endotherms and exotherms. The degree of crystallinity was calculated by comparison with heat of fusion of a perfectly crystalline polymer of the same polymer type, e.g. for polyethylene, 290 J/g.

**Glass transition temperature** ($T_g$) is determined by dynamic mechanical analysis according to ISO 6721-7.

The measurements are done in torsion mode on compression moulded samples (40 · 10 · 1 $mm^3$) between -100 °C and + 150 °C with a heating rate of 2 °C/min and a frequency of 1 Hz.

**Flexural Modulus:** The flexural modulus is determined according to ISO 178. The test specimens having a dimension of 80 × 10 × 4.0 $mm^3$ (length × width × thickness) are prepared by injection moulding according to EN ISO 1873-2. The specimens are conditioned at 23 °C and 50% relative humidity. The length of the span between the supports is 64 mm, the test speed is 2 mm/min and the force is 100 N.

**Content of xylene cold solubles** (XCS) is determined at 25 °C according to ISO 16152; first edition; 2005-07-01.

Number average molecular weight ($M_n$), **weight average molecular weight** ($M_w$) and polydispersity ($M_w/M_n$) are determined by Gel Permeation Chromatography (GPC) according to the following method:

The weight average molecular weight Mw and the polydispersity ($M_w/M_n$, wherein $M_n$ is the number average molecular weight and $M_w$ is the weight average molecular weight) is measured by a method based on ISO 16014-1:2003 and ISO 16014-4:2003. A Waters Alliance GPCV 2000 instrument, equipped with refractive index detector and online viscometer was used with 3×TSK-gel columns (GMHXL-HT) from TosoHaas and 1,2,4-trichlorobenzene (TCB, stabilized with 200 mg/L 2,6-di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5-10 mg of polymer in 10 mL (at 160 °C) of stabilized TCB (same as mobile phase) and keeping for 3 hours with continuous shaking prior sampling in into the GPC instrument.

**Melt viscosity** is measured according to ASTM D-3236.

**Transparency, haze and clarity:** All optical parameters are measured on 40 μm thick cast films. Transparency, haze and clarity were determined according to ASTM D 1003.

**Gloss** is measured on 40 μm thick cast film according to DIN 67530 at an angle of 60°.

**Tensile test** (modulus, strength and extension at break) is measured at 23 °C according to ISO 527-1 (with a specimen Type 2, 15 mm width at cross head speed 1 mm/min) and ISO 527-3 (with a specimen Type 2, 15 mm width at a speed of 200 mm/min) using 40 μm thick cast film.

Oxygen barrier property, i.e. **oxygen transmission rate,** is determined on cast films having a thickness of 40 μm. The specimen is mounted as a sealed semi-barrier between two chambers at ambient atmospheric pressure. One chamber is slowly purged by a stream of nitrogen and hydrogen gas mixture (2% $H_2$ in $N_2$) at a given temperature and relative humidity and the other chamber is purged by a stream of oxygen at the same temperature and relative humidity as the $N_2$ stream. As oxygen gas permeates through the film into the nitrogen carrier gas, it is transported to the coulometric detector where it produces an electrical current, the magnitude of which is proportional to the amount of oxygen flowing into the detector per unit time. The oxygen transmission rate test is performed as per ASTM D 3985, at 23 °C and 0% relative humidity, with using 10 sccm of $N_2/H_2$ and $O_2$ (99.999%) gases and a film surface area of 1 $cm^2$.

## 2. Examples

In the following inventive examples (IE) and comparative examples (CE) the following compounds are used.

**HD915CF,** is a propylene homopolymer containing 200 ppm or less of a nucleating agent. It has an $MFR_2$ of 8 g/10 min, a melting temperature of 164-170 °C, a flexural modulus of 2,100 MPa and a Vicat softening temperature of 158 °C.

**HD601CF,** is a propylene homopolymer. The polymer does not comprise any nucleating agent. HD601CF has an $MFR_2$ of 8 g/10 min, a melting temperature of 164 °C, a flexural modulus of 1,450 MPa and a Vicat softening temperature of 154 °C.

HD915CF and HD601CF are commercially available by Borealis AG or Borouge, respectively.

**Arkon P-125** is a fully hydrogenated hydrocarbon resin and is commercially available by Arakawa Chemical Industries, Ltd., Japan. The hydrocarbon resin has a softening point of 125 °C (ASTM E-28), a weight average molecular weight $M_w$ of 1300 g/mol and a melt viscosity of 300 mPa.s at 200 °C as measured according to ASTM D-3236.

**Constab MA930PP** is a master batch containing 60 wt.-% of a fully hydrogenated hydrocarbon resin and is commercially available by Constab Polyolefin Additives GmbH. The hydrocarbon resin has a softening point of 150 °C (ASTM E-28), a weight average molecular weight Mw of 800 g/mol and a melt viscosity of 200 mPa.s at 200 °C as measured according to ASTM D-3236.

**HPN20E** is an alpha-nucleating agent commercially available by Milliken Chemical.

**Preparation of the cast film samples.**

Cast films having a thickness of around 40 μm are produced on Collin equipment with different chill roll (CR) temperatures from the propylene homopolymers after compounding with a hydrocarbon resin (product) and/or an alpha-nucleating agent, if any.

Monolayer films are cast coextruded (three extruders are fed with the same product with structure 1/2/1).

Total thickness: 40 μm
Total throughput: 6 kg/h
Melt temperature: 210-220 °C, depended on the test sample

Chill roll temperature depends from the trial, from 20 to 50 °C as indicated in Table 1 below. The melt pressure is reduced in case of inventive examples. The more component (B), the more the melt pressure is reduced.

The following tables illustrate the films which were produced according to the inventive examples (IE) and comparative examples (CE) and also the obtained properties.

In the following tables the following abbreviations are used and units apply:

| | |
|---|---|
| P1 | for polymer 1, HD601CF |
| P2 | for polymer 2, HD915CF |
| HR1 | for hydrocarbon resin product 1, Arkon P-125, amount 10 or 20 wt.-% |
| HR2 | for hydrocarbon resin product 2, Constab MA930PP, amount 10 or 20 wt.-% |
| NA | for nucleating agent, HPN20E, amount 500 or 1,000 ppm |
| CRT | for chill roll temperature |
| TH | for thickness of the cast film |
| OTR | oxygen transmission rate, average values of three measurements, SD for standard deviation; values calculated for a 40.0 μm thick film and values calculated for a 1 mm thick film |
| HZ | for haze |
| GL | for gloss |
| TM | for tensile modulus; MD for machine direction, TD for transverse direction |

Table 1: Composition and properties of cast films

| | Polyolefin composition | | CRT /°C | TH /μm | OTR /ml/m$^2$·d 1 mm film | HZ | GL | TM /MPa MD/TD |
|---|---|---|---|---|---|---|---|---|
| CE1 | P1 | | 20 | 42.0 | 93 | 0.1 | 153 | 966/939 |
| CE2 | P1 | | 35 | 42.3 | 98 | | | |
| CE3 | P1 | | 50 | 43.3 | 94 | | | |
| CE4 | P2 | | 20 | 40.0 | 86 | | | |
| CE5 | P2 | | 35 | 40.5 | 85 | | | |
| CE6 | P2 | | 50 | 41.0 | 74 | 4.8 | 132 | |
| CE7 | P1 | NA 500 | 50 | 39.1 | 68 | | | |
| CE8 | P1 | NA 1,000 | 50 | 39.3 | 72 | | | |
| CE9 | P2 | NA 500 | 50 | 39.9 | 64 | | | |
| CE10 | P2 | NA 1,000 | 50 | 39.8 | 63 | 3.3 | 137 | |
| IE1 | P2 HR1 10 | NA 500 | 50 | 41.2 | 59 | | | |
| IE2 | P2 HR1 10 | | 50 | 38.2 | 59 | | | |
| IE3 | P2 HR1 20 | | 50 | 37.8 | 50 | 0.6 | 152 | 1670/1610 |
| IE4 | P2 HR2 10 | | 50 | 37.3 | 58 | | | |
| IE5 | P2 HR2 20 | | 50 | 41.6 | 48 | 1.3 | 144 | 1450/1420 |

The overview given by Table 1 demonstrates the powerful performance of the present invention as indicated by the inventive examples. In the inventive examples the oxygen transmission rate is very much reduced to values which are comparable to BOPP films at same thickness. Nevertheless, good optical properties are retained and mechanical (i.e. tensile modulus) properties are improved. This provides the possibility to pack more sensitive food. Alternatively, the thickness of films can be reduced or extra lamination omitted while keeping the same oxygen transmission rate.

The presence of the hydrocarbon resin allows to process the polypropylene based cast film (CPP) at higher chill roll temperature, i.e. without producing hazy films. As can be seen from examples CE1-CE3, without any nucleating agent present, the increase in chill roll temperature does not affect oxygen transmission rate while examples CE4-CE6, with a nucleating agent, show that there is an effect on oxygen transmission rate in case the chill roll temperature is higher, i.e. 50 °C. The skilled person knows, however, that chill roll temperatures above 30 °C result in hazy films. This

is confirmed by the performance of CE6. Addition of a nucleating agent as additive (CE7-CE10) also reduces, i.e. improves, oxygen transmission rate (compare CE3 with CE7 and CE8), or further improves oxygen transmission rate (compare CE6 with CE9 and CE10), respectively. However, hazy films are produced as confirmed by the performance of CE10.

Addition of a hydrocarbon resins further improves oxygen transmission rate (compare CE9 with IE1). The effect on oxygen transmission rate increases with increasing amount of hydrocarbon resin (compare IE2 with IE3 and IE4 with IE5). These films with very much improved oxygen transmission rate show acceptable optical properties and boosted tensile modulus (see IE3 and IE5). These films also have excellent processability.

Following Table 2 shows the same examples and cast films as Table 1, however, additional information as regards oxygen transmission rate values measured is provided.

Table 2: Composition and properties of cast films

| | Polyolefin composition | | | TH /μm | OTR/ml/m²·d average | SD | 40 μm | 1 mm |
|---|---|---|---|---|---|---|---|---|
| CE1 | P1 | | | 42.0 | 2214 | 182 | 2325 | 93 |
| CE2 | P1 | | | 42.3 | 2313 | 305 | 2446 | 98 |
| CE3 | P1 | | | 43.3 | 2175 | 272 | 2354 | 94 |
| CE4 | P2 | | | 40.0 | 2154 | 72 | 2154 | 86 |
| CE5 | P2 | | | 40.5 | 2110 | 93 | 2136 | 85 |
| CE6 | P2 | | | 41.0 | 1813 | 43 | 1858 | 74 |
| CE7 | P1 | | NA 500 | 39.1 | 1748 | 11 | 1709 | 68 |
| CE8 | P1 | | NA 1,000 | 39.3 | 1820 | 83 | 1788 | 72 |
| CE9 | P2 | | NA 500 | 39.9 | 1598 | 28 | 1594 | 64 |
| CE10 | P2 | | NA 1,000 | 39.8 | 1586 | 6.4 | 1578 | 63 |
| IE1 | P2 | HR1 10 | NA 500 | 41.2 | 1436 | 37 | 1479 | 59 |
| IE2 | P2 | HR1 10 | | 38.2 | 1554 | 43 | 1484 | 59 |
| IE3 | P2 | HR1 20 | | 37.8 | 1333 | 45 | 1260 | 50 |
| IE4 | P2 | HR2 10 | | 37.3 | 1552 | 32 | 1447 | 58 |
| IE5 | P2 | HR2 20 | | 41.6 | 1165 | 52 | 1212 | 48 |

## Claims

**1.** A process for producing a non-oriented cast film, wherein the film comprises a polyolefin composition comprising the components (A), (B) and (C):

- (A) a propylene homo- or copolymer with an $MFR_2$ of 0.5-80 g/10 min as measured in accordance with ISO 1133,
- (B) a hydrocarbon resin product comprising a hydrocarbon resin, wherein the hydrocarbon resin is **characterized by** a softening point of 200 °C or less as measured according to ASTM E-28, and
- (C) an alpha-nucleating agent,

wherein the process comprises the steps of

(a) providing the components for producing the film including components (A), (B) and (C),
(b) blending the components before or during melt-mixing in an extruder for producing a film,
(c) extruding the film by means of the extruder,
(d) cooling the obtained film by a chill roll having a temperature of 40-90 °C, and
(e) recovering of the obtained film.

**2.** The process according to claim 1, wherein the cooling of the extruded film in step (d) is effected by a chill roll having a temperature of 50-90 °C.

**3.** The process according to claim 1, wherein the nucleating agent (C) is a polymeric alpha-nucleating agent.

4. The process according to claim 3, wherein the nucleating agent (C) is selected from the group consisting of a vinylcycloalkane polymer, and a vinylalkane polymer, and mixtures thereof, more preferably the nucleating agent (C) comprises, yet more preferably consists of, vinyl cyclohexane polymer.

5. The process according to anyone of claims 1 to 4, wherein component (A) is a propylene copolymer and the comonomer in component (A) is ethylene and/or a $C_4$-$C_8$-$\alpha$-olefin, and the comonomer content is less than 7.5 mol.-% based on the propylene copolymer.

6. The process according to anyone of claims 1 to 4, wherein component (A) is a propylene homopolymer.

7. The process according to anyone of claims 1 to 6, wherein the propylene homo- or copolymer (A) has

- a melting temperature ($T_m$) of at least 150.0 °C as measured by differential scanning calorimetry (DSC), and/or
- a flexural modulus of at least 1,400 MPa as measured according to ISO 178, and/or
- Vicat softening temperature of at least 140 °C as measured according to ISO 306.

8. The process according to anyone of claims 1 to 7, wherein the amount of the hydrocarbon resin product (B) is 1-40 wt.-%, preferably 2-40 wt.-%, more preferably 7-30 wt.-%, based on the entire polyolefin composition.

9. The process according to anyone of claims 1 to 8, with the proviso that the polyolefin composition does not comprise a blend of a propylene homopolymer having a density of 0.91 g/cm$^3$ and a melt index of 2.0 g/10 min, 15 wt.-% of a fully hydrogenated hydrocarbon resin having a softening point of 125 °C, and 3,000 ppm of 1,3:2,4-dibenzylidene sorbitol.

10. The process according to anyone of claims 1 to 9, with the proviso that the polyolefin composition does not comprise a blend comprising a propylene ethylene random copolymer having a melt index at 230 °C and 2.16 kg load of 7.2 g/10 min, 0.3 wt.-% or 1.0 wt.-% of a hydrocarbon resin, and 0.05 wt.-% of calcium stearate.

11. The process according to anyone of claims 1 to 10, with the proviso that the polyolefin composition does not comprise a blend of 83.3 wt.-% of a polypropylene, 14.7 wt.-% of a hydrocarbon resin, 0.08 wt.-% of a nucleating agent, and 1.92 wt.-% of a low density polyethylene.

12. A non-oriented cast film obtainable by a process according to anyone of claims 1 to 11.

**Patentansprüche**

1. Ein Verfahren zur Herstellung einer nicht orientierten Gußfolie, wobei die Folie eine Polyolefin-Zusammensetzung umfasst, die die Komponenten (A), (B) und (C) umfasst:

- (A) ein Propylenhomo- oder -copolymer mit einer $MFR_2$ von 0,5-80 g/10 min, gemessen nach ISO 1133,
- (B) ein Kohlenwasserstoffharzprodukt, das ein Kohlenwasserstoffharz umfasst, wobei das Kohlenwasserstoffharz **gekennzeichnet ist durch**
einen Erweichungspunkt von 200 °C oder weniger, gemessen nach ASTM E-28,
und
- (C) einen Alpha-Keimbildner,

wobei das Verfahren die folgenden Schritte umfasst

(a) Bereitstellung der Komponenten für die Herstellung der Folie, einschließlich der Komponenten (A), (B) und (C),
(b) Mischen der Komponenten vor oder während der Schmelzmischung in einem Extruder zur Herstellung einer Folie,
(c) Extrudieren der Folie mit Hilfe des Extruders,
(d) Abkühlen der erhaltenen Folie durch eine Kühlwalze mit einer Temperatur von 40-90 °C, und
(e) Gewinnung der erhaltenen Folie.

2. Das Verfahren gemäß Anspruch 1, wobei die Kühlung der extrudierten Folie in Schritt (d) durch eine Kühlwalze mit einer Temperatur von 50-90 °C erfolgt.

3. Das Verfahren gemäß Anspruch 1, wobei das Nukleierungsmittel (C) ein polymeres Alpha-Nukleierungsmittel ist.

4. Das Verfahren gemäß Anspruch 3, wobei das Nukleierungsmittel (C) aus der Gruppe ausgewählt ist, die aus einem Vinylcycloalkanpolymer, einem Vinylalkanpolymer und Mischungen davon besteht, wobei das Nukleierungsmittel (C) vorzugsweise ein Vinylcyclohexanpolymer umfasst und noch bevorzugter aus einem solchen besteht.

5. Das Verfahren gemäß einem der Ansprüche 1 bis 4, wobei Komponente (A) ein Propylencopolymer ist und das Comonomer in Komponente (A) Ethylen und/oder ein $C_4$-$C_8$-$\alpha$-Olefin ist und der Comonomergehalt weniger als 7,5 Mol-%, bezogen auf das Propylencopolymer, beträgt.

6. Das Verfahren gemäß einem der Ansprüche 1 bis 4, wobei die Komponente (A) ein Propylen-Homopolymer ist.

7. Das Verfahren gemäß einem der Ansprüche 1 bis 6, wobei das Propylenhomo- oder - copolymer (A) folgende Eigenschaften aufweist

   - eine Schmelztemperatur ($T_m$) von mindestens 150,0 °C, gemessen durch Differential-Scanning-Kalorimetrie (DSC),
   und/oder
   - einen Biegemodul von mindestens 1.400 MPa, gemessen nach ISO 178,
   und/oder
   - eine Vicat-Erweichungstemperatur von mindestens 140 °C, gemessen nach ISO 306.

8. Das Verfahren gemäß einem der Ansprüche 1 bis 7, wobei die Menge des Kohlenwasserstoffharzprodukts (B) 1-40 Gew.-%, vorzugsweise 2-40 Gew.-%, noch bevorzugter 7-30 Gew.-%, bezogen auf die gesamte Polyolefin-Zusammensetzung, beträgt.

9. Das Verfahren gemäß einem der Ansprüche 1 bis 8, mit der Maßgabe, dass die Polyolefin-Zusammensetzung keine Mischung aus einem Propylen-Homopolymer mit einer Dichte von 0,91 g/$cm^3$ und einem Schmelzindex von 2,0 g/10 min, 15 Gew.-% eines vollständig hydrierten Kohlenwasserstoffharzes mit einem Erweichungspunkt von 125 °C und 3.000 ppm 1,3:2,4-Dibenzylidensorbit umfasst.

10. Das Verfahren gemäß einem der Ansprüche 1 bis 9, mit der Maßgabe, dass die Polyolefin-Zusammensetzung keine Mischung aus einem statistisches Propylen-Ethylen-Copolymer mit einem Schmelzindex bei 230 °C und 2,16 kg Belastung von 7,2 g/10 min, 0,3 Gew.-% oder 1,0 Gew.-% eines Kohlenwasserstoffharzes und 0,05 Gew.-% Calciumstearat umfasst.

11. Das Verfahren nach einem der Ansprüche 1 bis 10, mit der Maßgabe, dass die Polyolefin-Zusammensetzung keine Mischung aus 83,3 Gew.-% eines Polypropylens, 14,7 Gew.-% eines Kohlenwasserstoffharzes, 0,08 Gew.-% eines Nukleierungsmittels und 1,92 Gew.-% eines Polyethylens niedriger Dichte umfasst.

12. Eine nicht orientierte Gießfolie, erhältlich durch ein Verfahren nach einem der Ansprüche 1 bis 11.

## Revendications

1. Procédé de production d'un film coulé non orienté, dans lequel le film comprend une composition de polyoléfine comprenant les composants (A), (B) et (C) :

   - (A) un homo- ou copolymère de propylène avec un $MFR_2$ de 0,5-80 g/10 min, tel que mesuré selon la norme ISO 1133,
   - (B) un produit de résine hydrocarbonée comprenant une résine hydrocarbonée, dans lequel la résine hydrocarbonée est **caractérisée par** un point de ramollissement de 200 °C ou moins, tel que mesuré selon la norme ASTM E-28,
   et
   - (C) un agent d'alpha-nucléation, dans lequel le procédé comprend les étapes de

(a) fourniture des composants pour produire le film incluant les composants (A), (B) et (C),
(b) mélange des composants avant ou pendant le mélange à l'état fondu dans une extrudeuse pour produire un film,
(c) extrusion du film au moyen de l'extrudeuse,
(d) refroidissement du film obtenu par un cylindre refroidisseur présentant une température de 40-90 °C, et
(e) récupération du film obtenu.

**2.** Procédé selon la revendication 1, dans lequel le refroidissement du film extrudé à l'étape (d) est effectué par un cylindre refroidisseur présentant une température de 50-90 °C.

**3.** Procédé selon la revendication 1, dans lequel l'agent de nucléation (C) est un agent d'alpha-nucléation polymère.

**4.** Procédé selon la revendication 3, dans lequel l'agent de nucléation (C) est choisi dans le groupe consistant en un polymère de vinylcycloalcane et un polymère de vinylalcane, et des mélanges de ceux-ci, plus préférentiellement l'agent de nucléation (C) comprend, mais plus préférentiellement consiste en, un polymère de vinylcyclohexane.

**5.** Procédé selon l'une quelconque des revendications 1 à 4, dans lequel le composant (A) est un copolymère de propylène et le comonomère dans le composant (A) est de l'éthylène et/ou une $\alpha$-oléfine en $C_4$-$C_8$, et la teneur en comonomère est inférieure à 7,5 % en mole sur la base du copolymère de propylène.

**6.** Procédé selon l'une quelconque des revendications 1 à 4, dans lequel le composant (A) est un homopolymère de propylène.

**7.** Procédé selon l'une quelconque des revendications 1 à 6, dans lequel l'homo- ou copolymère de propylène (A) présente

- une température de fusion ($T_m$) d'au moins 150,0 °C, telle que mesurée par calorimétrie différentielle à balayage (DSC),
et/ou
- un module d'élasticité en flexion d'au moins 1 400 MPa, tel que mesuré selon la norme ISO 178,
et/ou
- une température de ramollissement Vicat d'au moins 140 °C, telle que mesurée selon la norme ISO 306.

**8.** Procédé selon l'une quelconque des revendications 1 à 7, dans lequel la quantité du produit de résine hydrocarbonée (B) est de 1-40 % en poids, de préférence de 2-40 % en poids, plus préférentiellement de 7-30 % en poids, sur la base de la totalité de la composition de polyoléfine.

**9.** Procédé selon l'une quelconque des revendications 1 à 8, à condition que la composition de polyoléfine ne comprenne pas un mélange d'un homopolymère de propylène présentant une densité de 0,91 g/cm$^3$ et un indice de fusion de 2,0 g/10 min, 15 % en poids d'une résine hydrocarbonée entièrement hydrogénée présentant un point de ramollissement de 125 °C, et 3 000 ppm de 1,3:2,4-dibenzylidène sorbitol.

**10.** Procédé selon l'une quelconque des revendications 1 à 9, à condition que la composition de polyoléfine ne comprenne pas un mélange comprenant un copolymère aléatoire de propylène-éthylène présentant un indice de fusion à 230 °C et une charge de 2,16 kg de 7,2 g/10 min, 0,3 % en poids ou 1,0 % en poids d'une résine hydrocarbonée, et 0,05 % en poids de stéarate de calcium.

**11.** Procédé selon l'une quelconque des revendications 1 à 10, à condition que la composition de polyoléfine ne comprenne pas un mélange de 83,3 % en poids d'un polypropylène, 14,7 % en poids d'une résine hydrocarbonée, 0,08 % en poids d'un agent de nucléation et 1,92 % en poids d'un polyéthylène basse densité.

**12.** Film coulé non orienté pouvant être obtenu par un procédé selon l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2002041972 A
- EP 0887379 A
- WO 9212182 A
- WO 2004000899 A
- WO 2004111095 A
- WO 9924478 A
- WO 9924479 A
- WO 0068315 A


### Non-patent literature cited in the description


- **NELLO PASQUINI.** instance polypropylene handbook. Hanser
- **HANS ZWEIFEL.** Plastic Additives Handbook. 2009, 1141-1190
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **BUSICO, V. ; CIPULLO, R. ; MONACO, G. ; VACATELLO, M. ; SEGRE, A.L.** *Macromoleucles,* 1997, vol. 30, 6251
- **RESCONI, L. ; CAVALLO, L. ; FAIT, A. ; PIEMONTESI, F.** *Chem. Rev.,* 2000, vol. 100, 1253
- **G. SINGH ; A. KOTHARI ; V. GUPTA.** *Polymer Testing,* 2009, vol. 28 (5), 475
- **Z. ZHOU ; R. KUEMMERLE ; X. QIU ; D. REDWINE ; R. CONG ; A. TAHA ; D. BAUGH ; B. WINNIFORD.** *J. Mag. Reson.,* 2007, vol. 187, 225
- **V. BUSICO ; P. CARBONNIERE ; R. CIPULLO ; C. PELLECCHIA ; J. SEVERN ; G. TALARICO.** *Macromol. Rapid Commun.,* 2007, vol. 28, 1128
- **L. RESCONI ; L. CAVALLO ; A. FAIT ; F. PIEMONTESI.** *Chem. Rev.,* 2000, vol. 100 (4), 1253
- **CHENG, H. N.** *Macromolecules,* 1984, vol. 17, 1950
- **W-J. WANG ; S. ZHU.** *Macromolecules,* 2000, vol. 33, 1157